# EUROPEAN PATENT APPLICATION

(11) **EP 3 296 158 A1**
(43) Date of publication of application: **21.03.2018**
(21) Application number: 16189479.5
(22) Date of filing: 19.09.2016
(51) Int. Cl.: B60R 9/06, B60P 3/10

(54) **A FOLDABLE MOTOR CARRIER ADAPTED TO BE MOUNTED ON A TRAILER HITCH OF A MOTOR VEHICLE**

(71) Applicant: Jansson, Lars-Olof, 780 67 Sälen (SE)
(72) Inventor: Jansson, Lars-Olof, 780 67 Sälen (SE)
(74) Representative: Reyier, Ann-Mari

(57) **Abstract**

The present invention relates to a foldable motor carrier adapted for mounting on a trailer hitch, comprising a first and second bar (1, 2), each having a lower and upper end (1a,2a,1b,2b), and their upper ends are pivotable to each other between an unfolded and folded position, means (4) for attaching the lower ends to the trailer hitch, and a beam (7) having a first end (7a) pivotally connected to the first bar and a second end (7b) removably attached to the second bar. The first end (7a) of the beam comprises two protruding elements (8a-b) pivotally connected to the upper end (1a) of the first bar and extending at a distance from each other on opposite sides of the first bar (1) and arranged so that a first space is defined between them for receiving the first bar. The second end (7b) of the beam comprises two protruding elements (8c-d) extending at a distance from each other so that a second space is defined between them for receiving the second bar (2) when the bars are in the unfolded position. The motor carrier comprises locking means (13) for removably attaching the protruding elements of the second end of the beam (7b) to the second bar (2).

## Description

### Field of the invention

The present invention relates to a foldable motor carrier adapted to be mounted on a trailer hitch of a motor vehicle and comprising two bars arranged so that their upper ends are pivotable in relation to each other between an unfolded position and a folded position, with means for attaching a lower ends of the bars to the trailer hitch when the bars are in the unfolded position, and a beam for receiving the motor having a first end pivotally connected to the upper end of the first bar and a second end adapted to be removably attached to the upper end of the second bar when the bars are in the unfolded position.

### Background of the invention

A boat engine may be an outboard motor designed to be affixed to the outside of a transom forming the stern of a vessel Outboard motors are the most common motorized method of propelling small watercraft. Unfortunately, the outboard motors are frequently targeted by thieves. For this reason the motor is often removed from the boat after using the boat and transported to a safe storage facility. Usually the motor is transported by car e.g. in the trunk of a car. When the motor is put in a horizontal position this may cause leakage of fluids from the motor.

Several devices and carriers have been developed for transportation of outboard motors on a vehicle. US8,128,106 discloses a trolley adapted to transport a motor. This trolley can be loaded and mounted on a loading platform of a truck or pick-up.

US6,189,754 and US5,509,592 disclose carriers for transporting an outboard motor comprising a framework that can be mounted on the back of a car. Several adjustments need to be made to the car in order to mount the framework.

SE537331 discloses a foldable carrier for an outboard motor adapted to be mounted on a trailer hitch of a car. The carrier comprises two bars with a lower end and an upper end, whereby the upper ends are pivoted away from each other when the carrier is in an unfolded position, a transverse link pivotally attachable to the two bars, a jaw provided with a concavity at each lower end of each bar, which jaws are adapted to pinch the trailer hitch for holding the carrier when the carrier is in the extended position. The carrier further comprises a linking system arranged at a distance from the transverse link comprising two links which are pivotally connected to each other and to each of the bars so that when the two links part the bars, the jaws pinches the trailer hitch. The carrier further comprises a rotatable beam for receiving the motor. The beam is pivotally attached to one of the bars and adapted to be removably attached to the other bar when the bars are in the unfolded position. The motor comprises attachment means for attaching the motor to the boat. The beam is adapted to receive the attachment means of the motor.

### Summary of the invention

It is an object of the present invention to provide an improved foldable motor carrier adapted to be mounted on a trailer hitch of a motor vehicle.
This object is achieved by a foldable motor carrier adapted to be mounted on a trailer hitch of a motor vehicle as defined in claim 1.

The carrier comprises a first and a second bar, each bar having a lower end and an upper end, and the bars are arranged so that their upper ends are pivotable in relation to each other between an unfolded position and a folded position, means for attaching the lower ends of the bars to the trailer hitch when the bars are in the unfolded position, and a beam for receiving the motor having a first end pivotally connected to the upper end of the first bar and a second end adapted to be removably attached to the upper end of the second bar when the bars are in the unfolded position. The carrier is characterized in that the first end of the beam comprises two protruding elements pivotally connected to the upper end of the first bar and extending at a distance from each other on opposite sides of the first bar and arranged so that a first space is defined between them for receiving the first bar, especially when the bars are in the unfolded position, the second end of the beam comprises two protruding elements extending at a distance from each other so that a second space is defined between them for receiving the second bar when the bars are in the unfolded position, and the motor carrier comprises locking means for removably attaching the protruding elements of the second end of the beam to the second bar. The two protruding elements in the second end of the beam are extending on opposite sides of the second bas when the when the bars are in the unfolded position.

The carrier is adapted for transport of a motor using a vehicle having a trailer hitch. The carrier is in its folded position when it is not in use. The carrier is in its unfolded position when it is attached to the trailer hitch and during transportation of the motor. Suitably, the protruding elements of the beam are designed so that they partly enclose the first and second bar when the bars are in the unfolded position. When the carrier is in its unfolded position, the bars are positioned in the space between the protruding elements, which extend from both sides of the beam, and the protruding elements partly enclose the first and second bar. The protruding elements provide a support for the bars in the unfolded position and by that increase the stability of the carrier. This provides for a stable and robust construction of the carrier, which allows for secure mounting and safe transport of the motor on the vehicle. The protruding elements present at the second end of the beam can also be used for locking the beam to the second bar, for example, using a locking pin. Thus, the locking device provided on the second bar in SE537331 can be omitted. Compared to the prior art carrier, the beam of the new carrier can be locked to the second bar using fewer parts.

In one embodiment, the first and second bars have a substantially rectangular cross-section, and the protruding elements of the beam are designed so that they enclose two opposite sides of the first and second bars when the bars are in the unfolded position. This construction further improves the stability of the carrier in the unfolded position.

In another embodiment, the beam is coplanar with the first and second bars. In an embodiment, the beam is coplanar with the first and second bars in the folded position as well as in the unfolded position. The bars and the beam extend in a same plane. This improves the stability of the carrier in the unfolded position. In the folded position, the carrier does not need much space for storage. The risk for damage of the carrier is also reduced because the parts of the carrier are coplanar.

In a further embodiment, the beam comprises an intermediate beam portion and two U-shaped portions attached to the first and the second end of the intermediate beam portion respectively, and said protruding elements are parts of the U-shaped portions. U-shaped portions are robust and easy to construct in large quantities and can easily be connected to an intermediate beam portion to construct the beam.

In an embodiment, the beam is pivotable at least 270° with respect to the first bar, and the beam is pivotable over the upper end of the first bar. The second bar is located on one side of the first bar and the beam is located on the opposite side of the first bar when the bars are in the folded position. In the folded position, the beam is positioned next to the bars on an outside of carrier. Thus, less space is needed for the carrier in the folded position. The linking system and the beam do not interfere with each other when the carrier is in the folded position. Further, the bars and the beam are arranged in the same plane in the folded position. Thus, the thickness of the folded carrier is reduced and less space is needed when that carrier is not being used.

In another embodiment, at least the upper part of the first and second bars are substantially parallel in the folded position, and the beam is aligned with the first and second bars in the folded position. The new carrier is less spacious in the folded position compared to the known carrier. Therefore, less space is needed when that carrier is not being used.

In one embodiment, the beam is provided with means for fixedly connecting the beam to the first bar when the bars are in the folded position. It is more convenient and safe to connect the beam to the first bar when the carrier is in the folded position. It may also prevent damage of the beam during storage of the carrier.

In one embodiment, the locking means comprise an elongated locking element, for example a locking pin, and the protruding elements of the second end of the beam and the upper end of the second bar are provided with through-holes for receiving the locking element for attaching the second end of the beam to the second bar. Through-holes and a locking element are simple and safe means for locking the different parts together. A stopping means may be used to prevent the locking element or pin from being removed from its position in the through-holes.

In yet another embodiment, the carrier comprises a linking system for locking the first and second bars in the unfolded position, and the linking system comprises a first link pivotally connected to the first bar, a second link pivotally connected to the second bar and to the first link, means for locking the first and second links to each other when the bars are in the unfolded position, and a handle attached to one of the first and the second links. The linking system provides additional stability for the carrier. The linking system may be positioned between the means or jaws and the beam, or at about 50% of the length of the bars. A handle provides a convenient and easy means for moving the links and thus for folding and unfolding the carrier. A handle reduces strength needed for separation of the bars and reduces risks for injuries by a user.

In a further embodiment, one of the first and second links is provided with a protruding part and the other of the first and second links is provided with an indentation for receiving the protruding part when the bars are in the unfolded position.
This allows for the links to be coplanar with the bars and the beam.

In a further embodiment, a handle is attached to one of the first and the second links and the other of the first and second links is provided with an indentation for receiving the protruding part when the bars are in the unfolded position.

The invention also relates to a method of mounting the carrier as defined above on a trailer hitch of a motor vehicle comprising
- positioning the means on the trailer hitch or on a ball head thereof,
- pressing the handle on the linking system to separate the bars away from each other and clamping the trailer hitch with the means,
- positioning the beam between the bars and locking the beam to the upper end of the second bar.

### Brief description of the drawings

The invention will now be explained more closely by the description of different embodiments of the invention and with reference to the appended figures.
- Fig. 1a: shows a perspective view of a foldable motor carrier according to an embodiment of the invention in the unfolded position.
- Fig. 1b: shows a side view of the motor carrier.
- Fig. 2: shows a front view of the motor carrier in the unfolded position.
- Fig. 3: shows a front view of the motor carrier in the folded position.
- Fig. 4a: shows a perspective view of an example of a beam.
- Fig. 4b: shows a side view of the beam shown in figure 4a.
- Fig. 5: shows a U-shaped portion with protruding elements.
- Fig. 6: shows an element with a concavity.
- Fig. 7a-c: show links and a handle from a linkage system.

### Detailed description of preferred embodiments of the invention

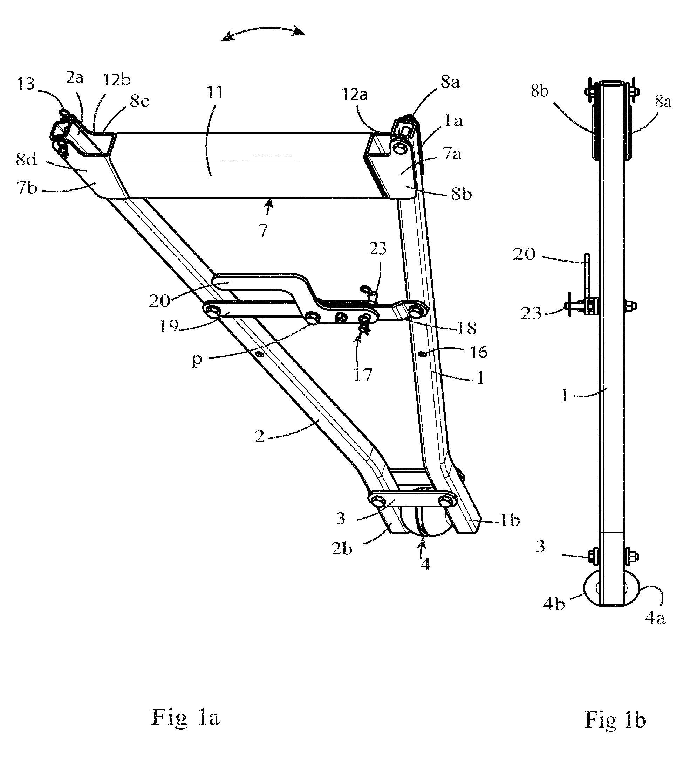

Figure 1a shows a foldable motor carrier according to an embodiment of the invention. Figure 1b shows a side view of the motor carrier. The motor carrier is adapted to be mounted on a trailer hitch, ortow bar, ortowing hitch or hitch of a motor vehicle (herein referred to as trailer hitch). The trailer hitch may be of a standard type with a ball head of about 50 mm in diameter.

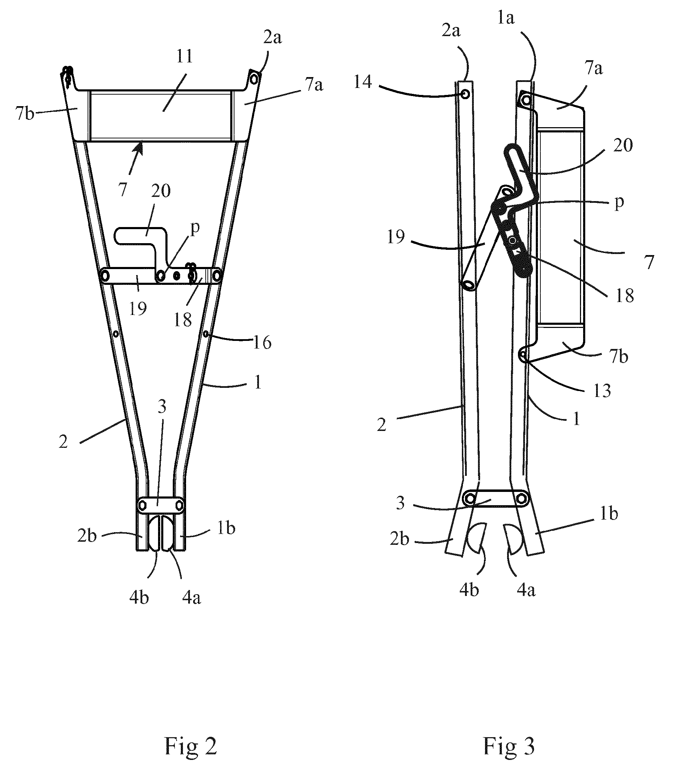

The motor carrier comprises of two elongated bars 1, 2 extending along a longitudinal axis. Each of the bars 1, 2 has an upper end 1a, 2a and a lower end 1b, 2b. Figures 1a and 2 show the motor carrier in the unfolded position, when the upper ends 1a, 2a of the first bar 1 and the second bar 2 are pivoted away from each other. Figure 3 shows the motor carrier in the folded position. In the folded position, the bars 1, 2 extend substantially parallel at least in an upper part of the bars 1a, 2a. In this embodiment, the bars have a rectangular cross-section.

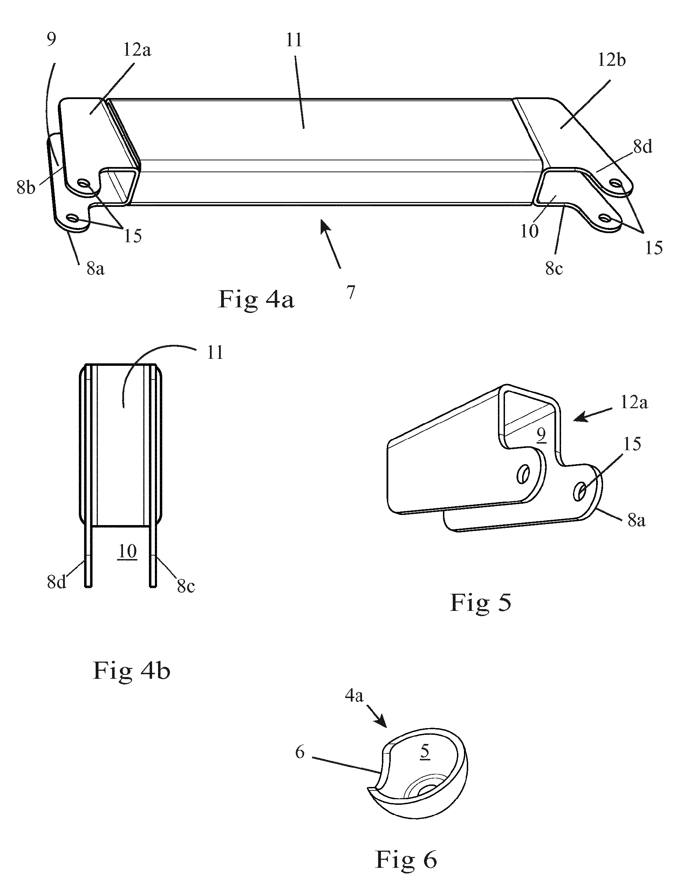

The motor carrier comprises means 4 for attaching the lower ends 1b, 2b of the bars to a trailer hitch when the bars are in the unfolded position, as shown in figure 1a. The means 4 comprise, for example, two jaws 4a-b arranged to clamp the trailer hitch between them when the carrier is in the unfolded position. The means 4 are positioned at the lower ends 1b, 2b of the bars. The dimensions of the jaws 4a-b is adapted to the dimensions of a trailer hitch so that the jaws can be firmly connected with the trailer hitch. This firm attachment is important for the stability of the motor carrier during transport of a motor. The jaws 4a-b are opened to receive the trailer hitch when the carrier is in the folded position, as shown in figure 3, and the jaws are closed when the carrier is in the unfolded position, as shown in figure 2. By moving the bars 1, 2 between the folded and unfolded position, the jaws are moved towards and away from each other. For example, if the trailer hitch comprises a neck that carries a ball head, the jaws 4a-b will have the shape of a ball with a concavity 5 to receive the ball head and an indentation 6 to receive the neck that carries the ball head as shown in figure 6. The jaws 4a, 4b pinches or clamps the trailer hitch or ball head thereof from two sides of the ball head, when the motor carrier is in the unfolded position. The indentations 6 of the jaws provide further stable positioning of the motor carrier on the trailer hitch.

A transverse link 3 is positioned near the lower ends 1b, 2b of the bars 1, 2. The transverse link 3 extends between the first and second bars 1, 2 and is articulately attached to the bars 1, 2 to allow the upper and lower ends 1a, 2a, 1b, 2b of the bars to be moved towards each other and away from each other. The link 3 may comprise a double link, as shown in figure 1a, to improve the stability of the motor carrier. The jaws are opened by separating the upper ends 1a, 2a of the bars 1, 2. Preferably, the transverse link 3 is located as close to the lower ends 1b, 2b of the bars as possible to reduce the force needed for opening and closing the jaws 4a-b in order to clamp the trailer hitch or ball head thereof.

The motor carrier comprises a beam 7 for receiving the motor. As shown in figure 1a, a first end 7a of the beam 7 comprises two protruding elements 8a-b pivotally connected to the upper end 1a of the first bar 1. The protruding elements 8a-b extend at a distance from each other on opposite sides of the first bar 1. The protruding elements 8a-b are arranged so that a first space 9 is defined between the elements 8a-b for receiving the upper part 1a of the first bar 1 when the carrier is in the unfolded position. A second end 7b of the beam 7 also comprises two protruding elements 8c-d extending at a distance from each other so that a second space 10 is defined between the elements 8c-d for receiving the second bar 2 when the carrier is in the unfolded position, as shown in figure 2. The spaces 9, 10 are adapted to the shape of the bars 1, 2 so that the bars 1, 2 are movable in the spaces 9, 10 to allow the bars to be moved between the folded and unfolded positions. Due to the rectangular cross-section of the bars, each of the bars 1, 2 has four sides: a first side facing an intermediate portion 11 of the beam 7, an second side facing away from the beam, and a third side facing one of the protruding elements 8a, 8c and a fourth side arranged on opposite the third side and facing the other of the protruding elements 8b, 8d. The protruding elements 8a-d are designed so that they extend along the third and fourth sides of the bars 1,2 and thus partly enclose the first and second bar 1, 2. The protruding elements 8a-d are extended in the longitudinal directions of the bars to provide a support for the bars in the unfolded position and by that increase the stability of the carrier.

The outer shape of the protruding elements is preferably adapted to the outer shape of the bars in the unfolded position so that the outer edges of the protruding elements are aligned with the second side of the bars, which is facing away from the beam, when the carrier is in the unfolded position. Preferably, the protruding elements 8a-d do not extend beyond the outer surface of the bars, i.e. on an outside of the bars.

Figure 4a shows a perspective view of an example of a beam 7. Figure 4b shows a side view of the beam 7 shown in figure 4a. In this embodiment, the beam 7 comprises an intermediate beam portion 11 and two U-shaped portions 12a, 12b arranged in first end 7a and the second end 7b of the beam 7, respectively. The U-shaped portions 12a, 12b are attached to the intermediate beam portion 11 on opposite sides. The U-shaped portions 12a, 12b and the bars 1, 2 are preferably made of metal. Figure 5 shows the U-shaped portion 12a in a perspective view. The first U-shaped portion 12a is pivotally connected to the upper end 1a of the first bar 1. The second U-shaped portion 12b is adapted to be removably attached to the upper end 2a of the second bar 2 when the bars are in the unfolded position, as shown in figures 1a and 2. In the unfolded position, the intermediate beam portion 11 of the beam 7 is positioned between the bars, i.e. on the inside of the bars 1, 2. As shown in figure 1a, the beam 7 is coplanar with the first and second bars, i.e. the longitudinal axis of the beam 7 is in the same plane as the longitudinal axes of the bars 1, 2. This is the case in the folded position as well as in the unfolded position. The protruding elements 8a-d of the U-shaped portions 12a-b are provided with through-holes 15. In the same way, the upper ends 1a, 2a of the bars 1, 2 are provided with through-holes corresponding to the through-holes of the protruding elements 8a-d to allow the beam to be connected to the bars. In this embodiment, the beam 7 is pivotally connected to the first bar 1 by means of a bolt extending through the through-holes 15 of the protruding elements 8a-b and the through-holes in the upper end 1a of the first bar 1.

The carrier comprises locking means 13 for removably attaching the protruding elements 8c-d of the second end 7b of the beam 7 to the second bar 2, as shown in figure 1. The locking means 13 may comprise an elongated locking element, such as a locking pin. The protruding elements 8c-d of the second end of the beam (7b) and the upper end (2a) of the second bar are provided with respective through-holes (14, 15) for receiving the locking element for attaching the second end of the beam (7b) to the second bar. The locking element is preferably adapted to be received in the through-holes present at the upper end 2a of the second bar 2 and the through-hole 15 present in the protruding elements of the second end of the beam.

The beam 7 is pivotable at least 270° with respect to the first bar 1. The beam 7 is pivotable over the upper end 1a of the first bar. When the motor carrier is in the folded position as shown in figure 3, at least the upper ends of the first and second bars 1, 2 are substantially parallel. In this position, the beam 7 can be aligned with the first and second bars. In the folded position, the beam 7 is located on the outside of the bars as shown in figure 3. The motor carrier may be provided with locking means 13 for fixedly connecting the beam to the first bar 1 when the bars are in the folded position. This locking means may comprise the same elongated element, for example a locking pin, as used for locking the beam to the second bar when the carrier is in the unfolded position, as shown in figure 2. The first bar 1 may have a through-hole 16 for this purpose. Thus, the first bar 1 is provided with a through-hole 16 for receiving the elongated element and arranged at a distance from the through-holes positioned in the upper part 1a of the first bar 1. The protruding elements 8a-b on the second end of the beam 7b have through-holes 15 that can be aligned with the through-hole 16 such that a locking means or locking pin 13 can be used to attach the beam to the first bar 1 when the motor carrier is in the folded position.

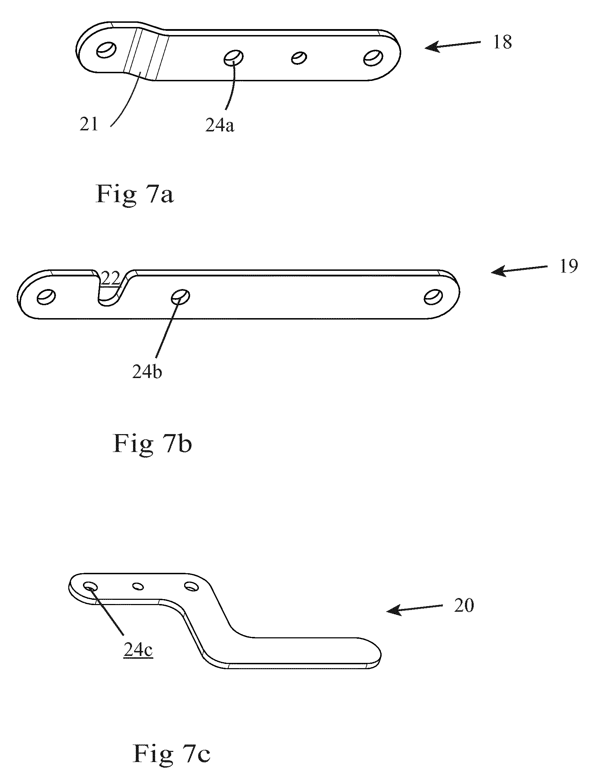

The motor carrier also comprises a linking system 17 for locking the first and second bars in the unfolded position. The linking system comprises a first link 18, which is pivotally connected to the first bar 1 and a second link 19, which is pivotally connected to the second bar 2 and to the first link. A handle 20 may be attached to one of the first and second links. In figure 1a, the handle 20 is attached to the first link 18. An example of the first link 18 is shown in more details in figure 7a, an example of the second link 19 is shown in more details in figure 7b, and an example of the handle 20 is shown in more details in figure 7c. As shown in figures 7a-b, the first and second links may have different lengths to improve the stability of the motor carrier. This also improves ease of using the linking system for separating the bars from each other. The handle 20 can be attached to the first link 18 and pivotally connected to the second link 19 as shown in figure 3. In this case, the pivotal connection point p of the second link with the first link and the handle are the same.

One of the first and second links is provided with a protruding part 21 and the other of the first and second links is provided with an indentation 22 for receiving the protruding part when the bars are in the unfolded position. In figure 7a, the protruding part 21 is present on the first link. In figure 7b, the indentation 22 is present on the second link 19.

The linking system preferably comprises means 23 for locking the first and second link to each other when the bars are separated from each other, i.e. in the unfolded position. The means 23 may be a locking pin or a resilient locking. For this purpose the first link, the second link and the handle have a through-hole 24a, 24b, 24c through which the locking means can be fitted.

The motor carrier may be mounted on a trailer hitch of a motor vehicle by positioning the means 4 on the trailer hitch or on a ball head positioned on the trailer hitch and pressing the linking system 17, or the handle 20 of the linking system so that the bars 1, 2 separate away from each other and the means clamp the trailer hitch, followed by positioning the beam 7 between the bars and locking the second end of the beam 7b to the upper end of the second bar 2a. The motor carrier can be folded by removing the beam from its position between the bars and pivot the beam over the upper end of the first bar. Then the handle can be drawn upwards toward the upper ends of the bars to fold the linking system. As a consequence, the bars will move together.

The present invention is not limited to the embodiments disclosed but may be varied and modified within the scope of the following claims. For example, in order to make the construction economically attractive and stable, the bars and the beam can be made of square pipes, for example square steel pipes. The dimensions may be 20 x 20 mm with a wall thickness of 1 to 5 mm, or about 2 mm. The transverse link 3, links 18, 19, the handle 20, the protruding elements 8 a-d, the U-shaped portions 12 a-b, etc. can be made of plates of for example steel. The thickness of these plates may be between 1 to 10 mm, or between 2 to 5 mm, or about 3 mm. Fastener elements in the various connection points are preferably comprised of screws with their locking nuts optionally with nylon inserts for locking. End caps can be inserted in the upper ends of the bars.

| **Feature** | **Reference** |
|---|---|
| first bar | 1 |
| second bar | 2 |
| upper end | 1a,2a |
| lower end | 1b,2b |
| transverse link | 3 |
| means, jaws | 4, 4a, 4b |
| concavity | 5 |
| indentation | 6 |
| beam | 7 |
| first end of beam | 7a |
| second end of beam | 7b |
| protruding element | 8a-d |
| first space | 9 |
| second space | 10 |

| | |
|---|---|
| intermediate beam portion | 11 |
| U-shaped portion | 12a,12b |
| locking means | 13 |
| through-hole | 14, 15, 16 |
| linking system | 17 |
| first link | 18 |
| second link | 19 |
| handle | 20 |
| protruding part | 21 |
| indentation | 22 |
| means | 23 |
| through-hole | 24a, 24b, 24c |
| pivoting point | p |

## Claims

1. A foldable motor carrier adapted to be mounted on a trailer hitch of a motor vehicle and comprising:
- first and a second bars (1, 2), each bar having a lower end (1b, 2b) and an upper end (1a, 2a), and the bars are arranged so that their upper ends are pivotable in relation to each other between an unfolded position and a folded position,
- means (4,4a-b) for attaching the lower ends (1b, 2b) of the bars to the trailer hitch when the bars are in the unfolded position, and
- a beam (7) for receiving the motor having a first end (7a) pivotally connected to the upper end (1a) of the first bar (1) and a second end (7b) adapted to be removably attached to the upper end (2a) of the second bar when the bars are in the unfolded position, **characterized in that** the first end of the beam (7a) comprises two protruding elements (8a-b) pivotally connected to the upper end (1a) of the first bar and extending at a distance from each other on opposite sides of the first bar (1) and arranged so that a first space (9) is defined between them for receiving the first bar, the second end of the beam (7b) comprises two protruding elements (8c-d) extending at a distance from each other so that a second space (10) is defined between them for receiving the second bar (2) when the bars are in the unfolded position, and the motor carrier comprises locking means (13) for removably attaching the protruding elements of the second end of the beam (7b) to the second bar (2).

2. The foldable motor carrier according to claim 1, wherein the first and second bars have a substantially rectangular cross-section, and the protruding elements of the beam are designed so that they enclose two opposite sides of the first and second bars when the bars are in the unfolded position.

3. The foldable motor carrier according to claim 1 or 2, wherein the beam (7) is coplanar with the first and second bars (1, 2).

4. The foldable motor carrier according to any one of the preceding claims, wherein the beam (7) comprises an intermediate beam portion (11) and two U-shaped portions (12a, 12b) attached to the first and the second ends of the intermediate beam portion respectively, and said protruding elements (8a-d) are parts of the U-shaped portions.

5. The foldable motor carrier according to any one of the preceding claims, wherein the beam (7) is pivotable at least 270° with respect to the first bar (1), and the beam is pivotable over the upper end (1a) of the first bar.

6. The foldable motor carrier according to any one of the preceding claims, wherein at least the upper end (1a, 2a) of the first and second bars are substantially parallel in the folded position, and the beam (7) is aligned with first and second bars in the folded position.

7. The foldable motor carrier according to any one of the preceding claims, wherein the second bar (2) is located on one side of the first bar (1) and the beam (7) is located on the opposite side of the first bar when the bars are in the folded position.

8. The foldable motor carrier according to claim 7, wherein the beam is provided with means (13) for fixedly connecting the beam (7) to the first bar (1) when the bars are in the folded position.

9. The foldable motor carrier according to any one of the preceding claims, wherein said locking means (13) comprise an elongated locking element, and the protruding elements (8c-d) of the second end of the beam (7b) and the upper end (2a) of the second bar are provided with a through-holes (15, 14) for receiving the locking element for attaching the second end of the beam (7b) to the second bar.

10. The foldable motor carrier according to any one of the preceding claims, wherein the carrier comprises a linking system (17) for locking the first and second bars in the unfolded position, and the linking system comprises a first link (18) pivotally connected to the first bar, a second link (19) pivotally connected to the second bar (2) and to the first link, means (23) for locking the first and second links to each other when the bars are in the unfolded position, and a handle (20) attached to one of the first and the second links.

11. The foldable motor carrier according to any one of the preceding claims, wherein one of the first and second links (18, 19) is provided with a protruding part (21) and the other of the first and second links is provided with an indentation (22) for receiving the protruding part when the bars are in the unfolded position.
